(19) Europäisches Patentamt
European Patent Office
Office européen des brevets

(11) **EP 4 265 090 A1**

(12) **EUROPEAN PATENT APPLICATION**

(43) Date of publication:
**25.10.2023 Bulletin 2023/43**

(21) Application number: **23157820.4**

(22) Date of filing: **21.02.2023**

(51) International Patent Classification (IPC):
**A01B 63/00** (2006.01)    **A01B 63/111** (2006.01)

(52) Cooperative Patent Classification (CPC):
**A01B 63/008; A01B 63/111**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.04.2022 US 202263333571 P
20.05.2022 US 202263344168 P**

(71) Applicant: **Parker Hannifin Corp.
Cleveland, OH 44124-4141 (US)**

(72) Inventors:
• **LARSON, Jacob S
Michigan, 55113 (US)**
• **JOHANSON, Stuart A
Minnesota, 55313 (US)**
• **KLEIN, Jason
Minnesota, 55304 (US)**

(74) Representative: **Murgitroyd & Company
Murgitroyd House
165-169 Scotland Street
Glasgow G5 8PL (GB)**

(54) **POSITION CONTROL SYSTEM FOR SURFACE ENGAGING MACHINERY**

(57)    An example control system includes a cylinder actuator comprising a cylinder, a piston movable within the cylinder and configured to be coupled to a surface engaging implement, and a chamber within the cylinder configured to receive fluid to apply a fluid force on the piston; a proportional control valve configured to control fluid flow from a source of fluid to the chamber; a position sensor coupled to the cylinder actuator and configured to provide position sensor information indicative of a position of the piston; and a controller having access to a desired surface engagement position for the surface engaging implement, wherein the controller is configured to receive the position sensor information, and send a valve command signal to the proportional control valve to change the fluid force applied to the piston to achieve the desired surface engagement position.

EP 4 265 090 A1

**FIG. 1B**

## Description

### TECHNICAL FIELD

The present disclosure relates generally to agricultural implements and, more particularly, to an agricultural surface (e.g., ground) engaging unit for use with agricultural machines or units such as planting row units, seeders, planter row cleaners, tillage implements, rotary broom/brush that could move debris from vertical or horizontal surfaces, mowers, etc.

### BACKGROUND

Conventional agricultural surface engaging machines (e.g., planters, seeders, tillage machines, mowers, planter row cleaners, a rotary broom/brush that could move debris from sidewalks, etc.) used springs, weights, or air bags in an attempt to maintain surface contact between a unit of the machine and the surface. Recent advancements have incorporated fluid power cylinders into these systems. As an agricultural surface (e.g., ground) engaging unit travels across fields, it is difficult to maintain constant surface engagement position (e.g., seeding depth) and other parameters using such conventional methods due to changing soil conditions (soil types, moisture, surface height, etc.). This problem is exacerbated by demands for machines to travel at faster speeds. It may thus be desirable to be able to vary the row unit down force to adapt to different soil conditions.

One solution to such problem is to replace conventional downforce methods (e.g., spring, weights, or airbag) with an active force control system. Such an active force control system, may enable each individual agricultural surface engaging unit (e.g., row or section) to react to the soil it encounters independently of the other units. In one such system, force or pressure feedback may be used to modify the surface engaging force so as to maintain a particular downforce.

However, such force or pressure feedback systems alone might not provide sufficient information to ensure that the unit engages the surface with a precise force at a particular position (e.g., seeding depth). For example, achieved pressure or force does not always correlate to the desired performance (e.g., desired seeding depth).

Further, in some cases, a mechanism or actuator might fail or malfunction. In such cases, a force or pressure sensor may indicate to a controller that a particular force is being applied, but would not provide enough information to the controller to determine that the mechanism or actuator has malfunctioned. It may thus be desirable to enhance surface engaging machine control systems to achieve and maintain a particular engaging depth regardless of soil conditions. It is with respect to these and other considerations that the disclosure made herein is presented.

## SUMMARY

The present disclosure describes implementations that relate to a position control system for surface engaging machinery. The claimed invention is defined in the appended independent claim(s). Optional features are defined in the dependent claims.

In a first example implementation, the present disclosure describes a control system. The control system includes: a source of fluid; a cylinder actuator comprising (i) a cylinder, (ii) a piston movable within the cylinder and configured to be coupled to a surface engaging implement of the surface engaging unit, and (iii) a chamber within the cylinder configured to receive fluid to apply a fluid force on the piston; a proportional control valve configured to control fluid flow from the source of fluid to the chamber; a position sensor coupled to the cylinder actuator and configured to provide position sensor information indicative of a position of the piston; and a controller having access to a desired surface engagement position for the surface engaging implement, wherein the controller is configured to perform operations comprising: receiving the position sensor information from the position sensor, and based on the position sensor information, sending a valve command signal to the proportional control valve to vary pressure level of fluid provided to the chamber of the cylinder, thereby changing the fluid force applied to the piston to achieve the desired surface engagement position.

In a second example implementation, the present disclosure describes a surface engaging machine. The surface engaging machine includes a plurality of row units, wherein at least one row unit of the plurality of row units comprises a surface engaging implement; and the control system of the first example implementation.

In a third example implementation, the present disclosure describes a method. The method includes: receiving, at a controller of a surface engaging unit having a surface engaging implement, information indicative of a desired surface engagement position for the surface engaging implement, wherein the surface engaging unit comprises: (i) a cylinder actuator comprising a cylinder, a piston movable within the cylinder and coupled to the surface engaging implement, and a chamber within the cylinder configured to receive fluid to apply a fluid force on the piston, (ii) a proportional control valve configured to control fluid flow from a source of fluid to the chamber, (iii) a position sensor coupled to the cylinder actuator and configured to provide position sensor information indicative of a position of the piston; receiving, at the controller, the position sensor information from the position sensor; and based on the position sensor information, sending, by the controller, a valve command signal to the proportional control valve to vary pressure level of fluid provided to the chamber of the cylinder, thereby changing the fluid force applied to the piston to achieve the desired surface engagement position.

The foregoing summary is illustrative only and is not intended to be in any way limiting. In addition to the illustrative aspects, implementations, and features described above, further aspects, implementations, and features will become apparent by reference to the figures and the following detailed description.

BRIEF DESCRIPTION OF THE FIGURES

Figure 1A illustrates a partial view of a surface engaging machine, in accordance with an example implementation.

Figure 1B illustrates a schematic view of a surface engaging unit of the surface engaging machine of Figure 1A, in accordance with an example implementation.

Figure 2 illustrates a control system of a surface engaging unit, in accordance with an example implementation.

Figure 3A illustrates a schematic of a cylinder actuator with a piston at a home position, in accordance with an example implementation.

Figure 3B illustrates a schematic of the cylinder actuator of Figure 3A with the piston extended, in accordance with an example implementation.

Figure 4 illustrates a block diagram of an actuator control system of a cylinder actuator, in accordance with an example implementation.

Figure 5 illustrates a control system of a row unit having a cylinder actuator configured as a single-acting actuator, in accordance with an example implementation.

Figure 6 illustrates a control system of a surface engaging unit, in accordance with an example implementation.

Figure 7 illustrates a control system of a surface engaging unit, in accordance with an example implementation.

Figure 8 is a flowchart of a method of controlling a surface engaging unit of a surface engaging machine, in accordance with an example implementation.

DETAILED DESCRIPTION

Disclose herein are systems and methods for enabling surface engaging machines to substantially maintain surface engagement position of an implement of the machine with a surface (e.g., ground or soil). The term "surface" is used herein to indicate any vertical or horizontal surface or plane. Example surfaces include ground, soil, wall, road, machine surfaces, etc. The term "surface engagement position" is used herein generally to indicate the extent (e.g., depth) of surface engagement (e.g., penetration) of an implement. For example, surface engagement position of a seeder or planter represents the depth of penetration of a seeder opener that forms a trench in the surface to plant the seed at a particular seeding depth. In another example, surface engagement position may represent the depth with which a tillage implement penetrates the surface. In another example, the surface engagement position may represent the grass cutting level (e.g., 2 inches above ground) of a grass cutting implement of a mower. In still another example, the surface engagement may indicate extent of engagement of a brush with a machine (e.g., car) with which the brush engages position. These are examples of machines, and it should be understood that other machines (e.g., planter row cleaners, road resurfacing machines, etc.) could be used.

The disclosed systems and methods include a fluid control systems and an actuator. The term "fluid" is used herein as including any gas or liquid. The fluid systems described here could be hydraulic or pneumatic systems.

The actuator has a force sensor and a position sensor providing force and position sensor information to a controller of the machine. The controller of the machine may command a particular engagement position (e.g., seeding depth), and controls the fluid system using feedback from the force and position sensors to cause the actuator to apply a particular force to achieve the desired engagement position.

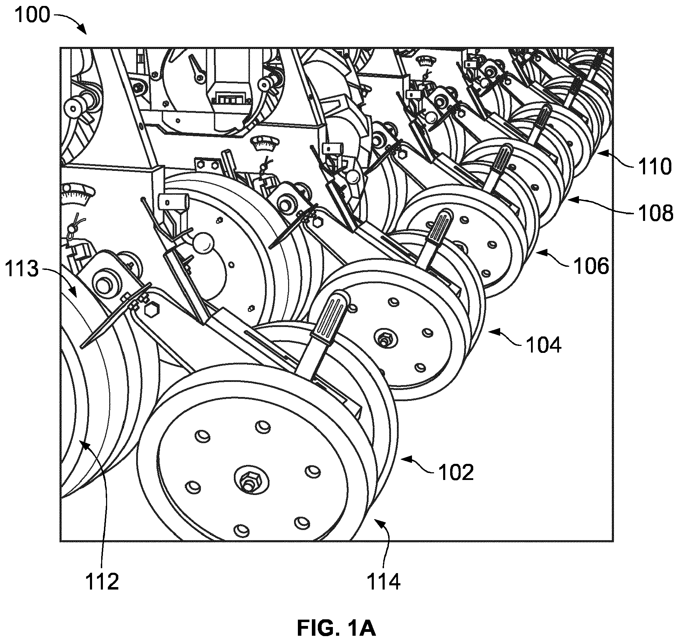

Figure 1A illustrates a partial view of a surface engaging machine 100, in accordance with an example implementation. The surface engaging machine 100 shown in Figure 1A can be a seeder or planter that is attached to a tractor, for example. A seeder/planter is used herein as an example. However, it should be understood that the systems, methods, and concepts discussed herein are applicable to any surface engaging machine such as tillage machines, mowers, row unit cleaners, a rotary broom/brush that could move dust from sidewalks, or any other machine that requires engagement of an implement with the surface.

The surface engaging machine 100 has several surface engaging row units such as row unit 102, row unit 104, row unit 106, row unit 108, and row unit 110. As the surface engaging machine 100 traverses a field, each row unit sows or plants seeds in straight lines in raised or flat soil beds.

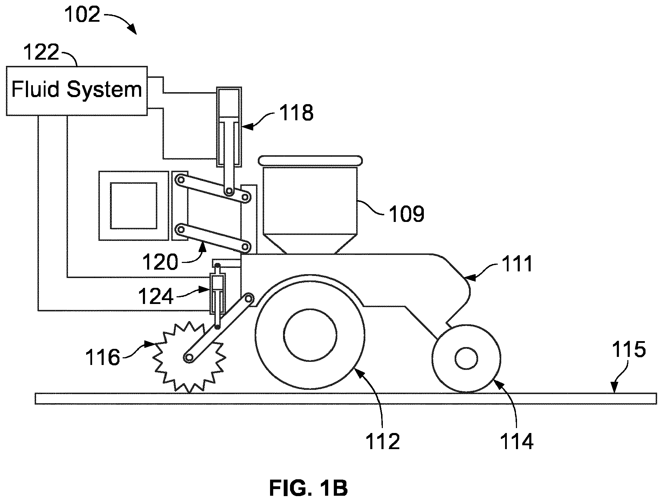

Figure 1B illustrates a schematic view of the row unit 102, in accordance with an example implementation. Referring to Figures 1A, 1B together, the surface engaging machine 100 can have a seed tank 109 storing seeds (e.g., corn, soy, etc.). Blowers can be used to direct seeds from the seed tank 109 through seed tubes (not shown) to the rowing units 102-110.

The row unit 102 can have a surface engaging implement 111 including gauge wheels 112 (e.g., adjustable wheels attached to a plow or planter to regulate the depth of penetration into the soil) and disk openers 113 (see Figure 1A), which include metal disks that contact a surface 115 (e.g., ground) to cut a trench at a particular depth to plant the seeds. The height of the gauge wheels 112 controls the height of the disk openers 113. For instance, raising the gauge wheels 112 can lower the disk openers 113 to cut a deeper trench and vice versa.

As the surface engaging machine 100 traverses the fields, the row unit 102 places seeds inside the trench at a particular depth. The row unit 102 further includes back wheels 114 that close the trench after depositing the seeds therein. The depth at which seeds are planted can be referred to as the surface engagement position of the surface engaging implement 111.

In an example, seeds are planted at a depth of two times the width, or diameter, of the seed. For example, a seed that is about 1/16 inch thick, can be planted about 1/8 inch deep. Large bean seeds, which can be up to 1/2 inch wide, may be planted an inch deep. As such, it may be desirable to control the seed depth (the depth at which the seed is deposited in underground).

As the depth of the trench that the seed opener digs is correlated with the height of the gauge wheels 112, it may be desirable to maintain contact between the gauge wheels 112 and the surface 115 as the surface engaging machine 100 traverses the field. To maintain such contact, it may be desirable to have the individual row units apply a particular downforce on the respective gauge wheels so as to maintain surface contact and to firm the soil at the edges of the trench to which the seed is placed.

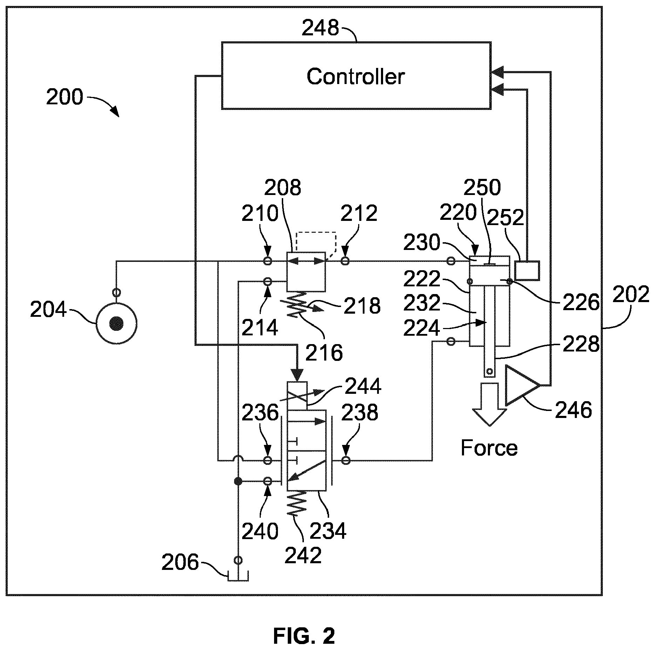

The row unit 102 can include a cylinder actuator 118 that is coupled to the surface engaging implement 111 and configured to apply a downforce thereto. In an example, the cylinder actuator 118 can be coupled to the surface engaging implement 111 via a linkage 120. The cylinder actuator 118 is configured to apply a downforce on the surface engaging implement 111. Such downforce causes the gauge wheels 112 and the disk openers 113 to apply a corresponding downforce force on the surface 115, and may thus affect the surface engagement position of the disk openers 113. A fluid system 122 (e.g., as described below with respect to Figures 2-7) is used to control fluid flow to and from the cylinder actuator 118 to change the force applied by the cylinder actuator 118 to the surface engaging implement 111.

In an example, the row unit 102 also has a row cleaner 116 formed as a spiked wheel. The row cleaner 116 is disposed ahead of the gauge wheel 112 and the disk openers 113, and is configured to move residue and clods out of the way of the disk openers 113 and the gauge wheels 112 to allow them to operate smoothly and to help eliminate unit vibration or bounce.

In an example, the downforce of the row cleaner 116 can be controlled via another cylinder actuator 124. The fluid system 122 can be used to control fluid flow to and from the cylinder actuator 124 to change the force applied by the row cleaner 116 to the surface 115, and thus change the engagement position of the row cleaner 116.

Soil conditions can vary widely. For instance, the surface engaging machine 100 may be subjected to different soil types: sand, clay, rock, etc. Further, individual row units of the surface engaging machine 100 can each be subjected to different soil conditions. For instance, moisture might not be consistent throughout the surface, e.g., ground in this case, and thus different row units may be subjected to different ground firmness. Further, the ground might be uneven, and thus different row units may be traversing over varying ground heights as the surface engaging machine 100 traverses the field. Thus, it may be desirable to actively control the downforce applied to the gauge wheels (or the row cleaner) of each row unit, such that a consistent downforce is applied to the respective gauge wheels (or row cleaner) regardless of the soil condition.

Further, in some cases, maintaining a constant downforce on the gauge wheel might not correlate with the position of the gauge wheel, which controls the position of the disk opener, which in turn determines the surface engagement position (e.g., seed depth). As such, in addition to controlling force, it may be desirable to control the position of the cylinder actuator 118 that controls the position of the gauge wheels and the disk openers to achieve a particular seed depth. Similarly, it may be desirable to control the position of the cylinder actuator 124 that controls the position of the row cleaner 116 to achieve a particular cleaning depth.

Figure 2 illustrates a control system 200 of a surface engaging unit 202, in accordance with an example implementation. The surface engaging unit 202 can represent any of the row units 102-110 of the surface engaging machine 100, for example.

The control system 200 includes a source 204 of fluid (e.g., a pump, an accumulator, another valve in a fluid system of the machine, a cylinder, etc.) capable of providing fluid at high pressures, e.g., 1000-5000 pounds per square inch (psi). As an example for illustration, the source 204 of fluid can provide fluid flow at a pressure level of 3000 psi.

The control system 200 also includes a fluid reservoir 206 that can store fluid at a low pressure level (e.g., atmospheric pressure or 0-70 psi). In an example, the source 204 of fluid can be configured to receive fluid from the fluid reservoir 206, then provide pressurized fluid to other components of the control system 200.

The control system 200 includes a pressure control valve 208 that is configured to receive fluid from the source 204. The pressure control valve 208 is configured to maintain fluid at a particular pressure level or within a particular pressure level range downstream of the pressure control valve 208.

As an example, as depicted symbolically in Figure 2, the pressure control valve 208 can be a pressure reducing-relieving valve. A pressure-reducing valve can provide a steady pressure into a part of the system that operates at a pressure level that is lower than normal system pressure (e.g., lower than pressure level of fluid provided by the source 204). A pressure reducing valve can be set for a desired downstream pressure within its design limits. For example, the pressure control valve 208 can received fluid from the source 204 at a pressure level of 3000 psi and provide fluid downstream at a reduced pressure level of 600 psi.

A pressure relief valve is a valve used to control or limit the pressure in a system. Pressure might otherwise build up and can cause instrument or equipment failure. The pressure control valve 208 combines or integrates a pressure relief function with a pressure reducing function so as to maintain pressure level downstream thereof substantially constant. The term "substantially constant" is used herein to indicate that pressure level can be maintained within a threshold valve (e.g., within 2%-5%) of a desired pressure level. For example, if a desired pressure level is 600 psi, the pressure control valve 208 can maintain pressure level downstream in the range 580-620 psi.

In the example implementation of Figure 2, the pressure control valve 208 has (i) an inlet port 210 that receives fluid from the source 204, (ii) an outlet port 212 through which fluid is discharged downstream of pressure control valve 208, and (iii) a drain port 214 that is fluidly-coupled to the fluid reservoir 206. The term "fluidly-coupled" is used throughout herein to indicate that fluid can flow or be communicated between two fluid passages, chambers, ports, or openings.

In an example, the pressure control valve 208 can be a normally-open pressure control valve configured to reduce a high pressure received at the inlet port 210 to a controlled lower pressure (reduced pressure) at the outlet port 212. The reduced pressure is determined by a biasing force of a spring 216 plus any pressure at the drain port 214. The biasing force of the spring 216 can be adjustable (e.g., manually or electrically) as depicted symbolically by an arrow 218.

The pressure control valve 208 further integrates pressure relief valve function from the reduced pressure at the outlet port 212 to the drain port 214. Particularly, the pressure control valve 208 allows the reduced pressure at the outlet port 212 to remain relatively constant under back flow conditions, e.g., if back flow is received at the outlet port 212 at a higher pressure level than the set reduced pressure level. Such higher pressure level fluid at the outlet port 212 is relieved to the drain port 214 to maintain pressure level at the outlet port 212 substantially constant.

Fluid discharged from the pressure control valve 208 via the outlet port 212 is provided to a cylinder actuator 220. The cylinder actuator 220 represents the cylinder actuator 118 or the cylinder actuator 124, for example. The cylinder actuator 220 includes a cylinder 222 and a piston 224 that is slidably-accommodated in the cylinder 222.

The piston 224 includes a piston head 226 and a piston rod 228 extending from the piston head 226 along a central longitudinal axis direction of the cylinder 222. The piston rod 228 can be coupled to the gauge wheels 112 of the row unit 102 of the surface engaging machine 100, for example.

The piston head 226 divides the internal space of the cylinder 222 into a first chamber 230 and a second chamber 232. The first chamber 230 can be referred to as a head chamber or cap chamber, whereas the second chamber 232 can be referred to as a rod chamber. The pressure control valve 208 provides fluid flow to the first chamber 230 at a particular pressure level (e.g., 600 psi).

Fluid in the first chamber 230 applies a force on the piston 224 in a first direction (e.g., downward in Figure 2). Assuming that a diameter of the piston head 226 is $D_1$, then a surface area of the piston head 226 on which fluid in the first chamber 230 acts can be determined as

$A_1 = \pi \dfrac{D_1^2}{4}$. Assuming pressure level of fluid in the first chamber 230 (which is controlled by the pressure control valve 208) is $P_1$, then a fluid force $F_1$ that the fluid in the first chamber 230 applies on the piston 224 can be determined as

$$F_1 = P_1 . A_1 = P_1 . \pi \frac{D_1^2}{4}$$

. Because the pressure control valve 208 causes $P_7$ to be a substantially constant pressure level, the force F1 is a substantially constant fluid force.

The control system 200 further includes a proportional control valve 234 that can control fluid flow and pressure level in the second chamber 232. The proportional control valve 234 has (i) an inlet port 236 that is fluidly-coupled to the source 204 of fluid, (ii) an outlet port 238 that is fluidly-coupled to the second chamber 232 of the cylinder actuator 220, and (iii) a return port 240 that is fluidly-coupled to the fluid reservoir 206.

The proportional control valve 234 can include movable element (e.g., spool, poppet, or piston) disposed therein. The position of the movable element within the valve controls fluid flow rate and direction through the proportional control valve 234.

The proportional control valve 234 can have a spring 242 that biases the movable element to an unactuated position. At the unactuated position, the proportional control valve 234 blocks the inlet port 236 and allows fluid flow from the outlet port 238 to the return port 240 as depicted schematically in Figure 2. In such state, fluid in the second chamber 232 can have pressure level of fluid in the fluid reservoir 206 (e.g., 0-70 psi). The term "block" is used throughout herein to indicate substantially preventing fluid flow except for minimal or leakage flow of drops per minute, for example.

The proportional control valve 234 can be electrically-actuated via a solenoid actuator 244. The solenoid actuator 244 receives a command signal, and responsively changes the position of the movable element of the proportional control valve 234 to an actuated position. In the actuated state, the proportional control valve 234 allows fluid flow from the inlet port 236 to the outlet port 238, and blocks the return port 240.

Particularly, as the movable element moves, a variable orifice or flow area is formed within the proportional control valve 234 to fluidly couple the inlet port 236 to the outlet port 238. The size of the flow area is based on the magnitude of the command signal (e.g., the magnitude of the voltage or current of the command signal). For example, the lager the magnitude of the command signal, the larger the flow area (the less restrictive the proportional control valve 234 becomes and the smaller the pressure drop or differential across the proportional control valve 234). In this case, if the source 204 provides fluid at a particular flow rate, then pressure level at the outlet port 238 and in the second chamber 232 increases as the flow area increases.

Conversely, the smaller the magnitude of the command signal, the smaller the flow area of the proportional control valve 234 (the more restrictive the proportional control valve 234 becomes and the lager the pressure differential across the proportional control valve 234). In this case, pressure level at the outlet port 238 and in the second chamber 232 decreases as the flow area decreases.

Fluid in the second chamber 232 applies a force on the piston 224 in a second direction (e.g., upward in Figure 2) opposite the first direction. Assuming that a diameter of the piston rod 228 is $D_2$, then a surface area of the piston 224 on which fluid in the second chamber 232 acts is the annular area that can be determined as

$$A_2 = \pi \frac{D_1^2}{4} - \pi \frac{D_2^2}{4}$$

. Assuming pressure level of fluid in the second chamber 232 (which is controlled by the proportional control valve 234) is $P_2$, then a respective fluid force $F_2$ that the fluid in the second chamber 232 applies on the piston 224 can be determined as

$$F_2 = P_2 . A_2 = P_2 . \left( \pi \frac{D_1^2}{4} - \pi \frac{D_2^2}{4} \right)$$

.

Thus, the resultant or net force acting on the piston 224 can be determined as $F_{net} = F_1 - F_2 = P_1 . A_1 - P_2 . A_2$. In the example implementation shown in Figure 2, the pressure level in the first chamber 230, and thus the force $F_1$, is substantially constant. By varying the command to the proportional control valve 234, the pressure level in the second chamber 232 and the force $F_2$ can be changed to adjust the net force $F_{net}$. The net fluid force $F_{net}$ applied to the piston 224 is transmitted to the implement (e.g., the gauge wheels 112) coupled to the piston 224, and the implement then applies the force to the surface. With this configuration, the downward force or the net force $F_{net}$ which the piston 224 applies to the surface engaging implement (e.g., to the gauge wheels 112 or the associated seed opener) can be adjusted by varying the command to the proportional control valve 234 until a desired downward force is achieved.

Particularly, in the example implementation of Figure 2, a substantially constant force $F_1$ is applied to the piston 224 downward given that the pressure control valve 208 maintains pressure level in the first chamber 230 substantially constant (e.g., 600 psi). On the other hand, the command signal to the proportional control valve 234 varies the pressure level in the second chamber 232. For instance, if the source 204 of provides at a particular flow rate and at a pressure level of 3000 psi, the proportional control valve 234 can vary the pressure in the second chamber 232 proportionally between 0 psi (when the proportional control valve 234 is unactuated and blocks fluid flow from the inlet port 236 to the outlet port 238) to about 3000 psi (when the proportional control valve 234 is fully open). Thus, the force $F_2$ applied to the piston 224 upward can vary between a low value and a high value. With this configuration, the net force $F_{net}$ can vary in a continuum between a net downward force and a net upward force based on the magnitude of the command signal to the solenoid actuator 244.

To facilitate achieving a desired net force, the cylinder actuator 220 can include one or more sensors configured to provide information indicative of the actual net force $F_{net}$ applied to the piston 224. For example, the cylinder actuator 220 can include a force sensor 246 represented schematically in Figure 2. Various types of force sensors or force transducers can be used. Example force sensors include a load cell, a strain gauge force sensor, a piezoelectric force sensor, an inductive force sensor, a capacitive force sensor, a magnetostrictive force sensors, pressure sensors in each of the chambers 230, 232, etc. Thus, the term "force sensor" is used throughout herein to indicate one or more sensors capable of providing sensor information that can be used to determine the net force $F_{net}$.

In the example implementation of Figure 2, the force sensor 246 can be coupled to the piston rod 228 to which a machine implement (seed opener or gauge wheels) is attached. The control system 200 includes a controller 248 that is communication with, and receives sensor information from, the force sensor 246, and accordingly determines the net force $F_{net}$ applied to the piston 224 (and thus applied by the implement coupled to the piston 224 to the surface). In examples, the force sensor 246 or an additional force sensor can be coupled to the gauge wheels 112 so that the force sensor can account for differences in weight of the row unit, which can vary based on brand, whether full seed load is included, etc.

The controller 248 can include one or more processors or microprocessors and may include data storage (e.g., memory, transitory computer-readable medium, non-transitory computer-readable medium, etc.). The data storage may have stored thereon instructions that, when executed by the one or more processors of the controller 248, cause the controller 248 to perform operations described herein. The controller 248 can receive input information comprising input commands indicating a target net force $F_{net}$, and also receives sensor information from the force sensor 246. In response, the controller 248 provides a command signal to the proportional control valve 234 (e.g., to the solenoid actuator 244) to vary the pressure level in the second chamber 232 until the desired net force is achieved.

Particularly, the controller 248 can compare the actual net force $F_{net}$ indicated by the force sensor 246 to a target or desired net force, and then adjust the command signal (i.e., adjust the magnitude of the electric current or voltage) sent to the solenoid actuator 244 of the proportional control valve 234 to achieve the target net force. As such, the controller 248 can implement a closed-loop feedback control system to achieve the target net force based on the feedback signal from the force sensor 246.

In some cases, achieving a desired net fore might not correlate consistently with achieving a particular desired engagement position (e.g., seeding depth) of the implement attached to the piston 224. For example, if the piston 224 reaches an end of its stroke (i.e., fully-retracted or fully-extended positions), it cannot move further. In this example, the force sensor 246 might indicate that a particular desired net force is achieved; however, the piston 224 might not be at a particular position at which a desired engagement position is achieved.

In another example, a malfunction or failure might happen in the cylinder actuator 220, the piston 224, mechanical linkage that connects the piston 224 with the implement, or in the implement itself. In such cases, the force sensor 246 may indicate that a desired net force is achieved, but might not indicate that such a failure or malfunction has occurred.

In another example, under some operating conditions, it may be desirable to disengage some row units from the surface while having other row units engaging the surface. For instance, a plant seeder (e.g., the surface engaging machine 100) may have between 6 and 48 row units. Adjacent row units may be disposed 15 inches apart from each other. When planting some crops (e.g., soy bean) all row units may be used to have the crop rows spaced apart by 15 inches.

However, when planting other crops (e.g., corn), only every other row unit may be used to have the crop rows spaced apart by 30 inches. In this case, every other row unit may be lifted up by applying an upward force (e.g., sending a full command signal to the proportional control valve 234) to retract the piston 224 to a fully-retracted position. This way, the associated implement or row unit is disengaged from the surface.

It may be desirable to confirm that the piston 224 has fully-retracted prior to seeding the crops. The force sensor 246 may indicate that a desired net force has been achieved, but might not provide sufficient information related to a position of the piston 224 to confirm that the piston 224 has been fully-retracted.

As such, in these examples, it may be desirable to include, in addition to the force sensor 246, a position sensor providing sensor information indicative of a linear or axial position of the piston 224. The combination of the force sensor 246 and a position sensor may provide more precise control of the engagement position of the implement, may indicate whether a failure has occurred, and may provide confirmation of a position of the implement.

Various types of position sensors can be used to indicate position of the piston 224. Example linear position sensors include linear potentiometers, linear magnetic Hall Effect sensors, magnetostrictive linear position sensor, incremental linear encoders, linear inductive position sensors, linear variable differential transformer (LVDT) sensors, draw-wire sensors, Eddy current sensors, capacitive position sensors, single point laser sensors, finger optic linear position sensors, rotary encoders, etc.

In the example implementation of Figure 2, the position sensor may include a magnet 250 coupled to the piston head 226 of the piston 224 and a magnetic sensor 252 that is a non-contact sensor mounted to the cylinder 222. The magnetic sensor 252, for example, can be configured to measure magnetic field intensity.

As the piston 224 moves, the magnet 250 moves therewith, and the magnetic field intensity sensed or measured by the magnetic sensor 252 changes. The position of the piston 224 to which the magnet 250 is attached can be correlated with the magnetic field intensity measured by the magnetic sensor 252. Particularly, the controller 248 can receive the magnetic field intensity information from the magnetic sensor 252, and can then determine the position of the piston 224 based on the magnetic field intensity information.

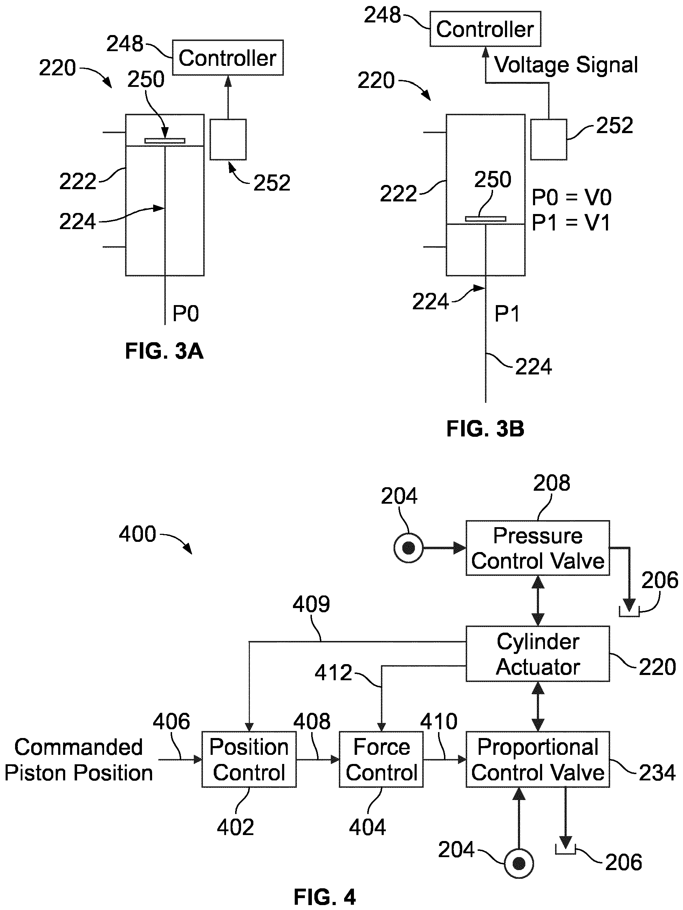

Figure 3A illustrates a schematic of the cylinder actuator 220 with the piston 224 at a home position, and Figure 3B illustrates a schematic of the cylinder actuator 220 with the piston 224 extended, in accordance with an example implementation. In an example, the home position P0 shown in Figure 3A can be a fully-retracted position of the piston 224. At this position, the magnetic sensor 252 can generate a voltage signal V0 indicative of a particular magnetic field intensity.

As the piston 224 moves (e.g., extends) to a position P1 shown in Figure 3B, the magnetic field intensity measured by the magnetic sensor 252 changes due to the magnet 250 moving away from the magnetic sensor 252. Thus, the magnetic sensor 252 generates a voltage signal V1 indicative of the magnetic field intensity at the position P1. The controller 248 can then determine the position of the piston 224 based on the voltage signal received from the magnetic sensor 252. For example, the controller 248 can use a look-up table or a transfer function to transform the voltage signal to a correlated position of the piston 224.

Referring back to Figure 2, the controller 248 is in communication with the position sensor (e.g., with the magnetic sensor 252) and configured to receive position sensor information therefrom. The controller 248 can use the position sensor alone or with the force sensor 246 to enhance control of the cylinder actuator 220. For example, the controller 248 can implement a nested control loop using feedback from both sensors to control the engagement position of the implement attached to the piston 224.

Figure 4 illustrates a block diagram of an actuator control system 400 of the cylinder actuator 220, in accordance with an example implementation. In Figure 4, the cylinder actuator 220, the pressure control valve 208, and the proportional control valve 234 are represented generically as blocks to indicate that various types of actuators and valves could be used. The source 204 and the fluid reservoir 206 are drawn in two different places to reduce visual clutter in the drawing. Fluid lines are represented by thick arrows, while signal lines are represented by thin arrows.

In the example implementation shown in Figure 4, the actuator control system 400 is a closed-loop feedback control system having two control loops or control modules: a position control module 402 and a force control module 404. The position control module 402 and the force control module 404 can, for example, be implemented by the controller 248.

The controller 248 has access to a commanded or desired surface engagement position (e.g., seeding depth or the like). For example, the desired surface engagement position may be stored in a memory of the controller 248. In another example, the controller 248 can receive a command from another central controller or from a user (e.g., through a user interface) of the surface engaging machine 100 indicating a desired surface engagement position. The controller 248 can convert such commanded engagement position to a commanded piston position for the piston 224. For instance, the piston 224 can be coupled to a surface engaging implement via a linkage having a particular kinematic configuration. The controller 248 can determine the commanded piston position based on kinematic relationship between the position of the piston 224 and the engagement position of the surface engaging implement.

The commanded piston position is provided as a commanded piston position signal 406 to the position control module 402. The position control module 402 then determines or generates a reference force command 408 based on a first error or first difference between the commanded piston position signal 406 and a piston position sensor information signal 409 received from the position sensor (e.g., the magnetic sensor 252 coupled to the piston 224). The position control module 402 can change the reference force command 408 to change the position of the piston 224 until the commanded piston position is achieved. This way, the position control module 402 implements a closed-loop force control to control the position of the piston 224.

The position control module 402 provides the reference force command 408 to the force control module 404. The force control module 404 then provides a valve command signal 410 to the proportional control valve 234 based on a second error or second difference between the reference force command 408 and a force sensor information signal 412 provided by the force sensor 246 and indicating the actual net force $F_{net}$. The valve command signal 410 can vary the pressure in the second chamber 232 of the cylinder actuator 220, thereby changing the net force $F_{net}$. This way, the force control module 404 implements a closed-loop force control to control the net force $F_{net}$ applied to the piston 224, which is also the force that the piston 224 applies to the implement (e.g., the gauge wheel 112 or the seed opener described above) attached there to.

As an example for illustration, the position control module 402 and the force control module 404 can include a proportional-integral (PI) controller or a proportional-integral-derivative (PID) controller. Implementing such closed loop control schemes on position and force may facilitate accurately positioning the piston 224 to achieve the commanded piston position.

The position sensor can further be used to provide performance diagnostics information and confirmation about the status of individual actuators. For example, if a malfunction or failure happens in the cylinder actuator 220, the piston 224, mechanical linkage that connects the piston 224 with the implement, or in the implement itself, the position sensor may provide diagnostic information indicating the status of the cylinder actuator 220 to help diagnose whether and where a failure has occurred. For instance, while the force sensor 246 may indicate that a desired net force is achieved, the position sensor may indicate that position of the piston 224 is not changing or that the piston 224 has reached its fully-retracted or fully-extended position and may thus not be achieving a desired engagement position.

In an example, the surface engaging machine 100 (e.g., a tractor) may be traversing a field at a high speed such that the implement (e.g., the gauge wheels or the seed opener) coupled to the piston 224 cannot respond fast enough to follow the terrain. In this case, the position sensor may indicate to the controller 248 that the piston 224 is not moving fast enough to its desired position to follow the terrain. The controller 248 may then indicate to the controller of vehicle (e.g., tractor) to slow down.

In an example, the controller 248 may use position information from the position sensor to monitor the magnitude of the stroke of the piston 224 and mean position of the piston 224 to determine the quality of performance of the cylinder actuator 220. For example, if the piston 224 reaches its stroke limits (i.e., a fully-retracted or fully-extended positions), that might indicate suboptimal performance as reaching such full stroke may indicate that the cylinder actuator 220 dos not have room to achieve a particular force or desired engagement position.

In another example, if the source 204 is not providing sufficient flow rates or is not providing fluid at a particular desired pressure, the piston 224 might not reach its desired position or achieve the desired net force. In this example, the position sensor and the force sensor may indicate such deficiencies to the controller 248.

In another example, as mentioned above, the position sensor may provide a confirmation that some row units were disengaged from the surface (e.g., the ground) as desired to achieve particular seeding row distances. Particularly, the position sensor may confirm that the piston 224 of a given row unit has fully-retracted prior to seeding the crops.

It should be understood that several variations can be implemented to the control system 200 and the actuator control system 400. For example, the control system 200 or the actuator control system 400 might not include the force sensor 246 and may rely only on the position sensor feedback to vary the commanded signal to the proportional control valve 234.

In another example, although in Figure 2, fluid at a constant pressure is provided to the first chamber 230 (i.e., the head or cap chamber) to provide a constant downward force, and pressure level in the second chamber 232 (the rod chamber) is varied to provide a variable upward force to change the net force $F_{net}$, in other example implementations, the configuration can be flipped such that constant pressure is provided to the second chamber 232, whereas a varying pressure is provided to the first chamber 230. Further, although the cylinder actuator 220 is depicted and described as a double-acting cylinder actuator in which fluid acts on both sides of the piston 224, in another example implementation, a single-acting cylinder actuator can be used.

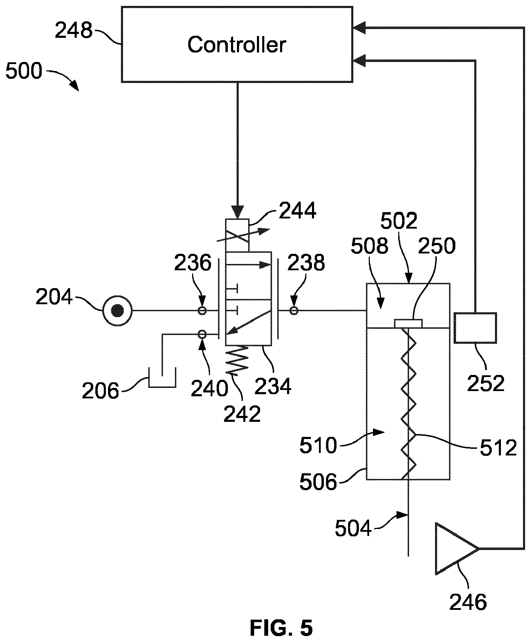

Figure 5 illustrates a control system 500 of a row unit having a cylinder actuator 502 configured as a single-acting actuator, in accordance with an example implementation. The cylinder actuator 502 has a piston 504 movable within a cylinder 506, where the piston head of the piston 504 divides the inner space of the cylinder 506 into a first chamber 508 and a second chamber 510.

In the example implementation of Figure 5, the proportional control valve 234 controls fluid flow to, and pressure level in, the first chamber 508. The control system 500, however, does not have a pressure control valve controlling fluid pressure in the second chamber 510. Rather, as the cylinder actuator 502 is a single acting cylinder, fluid acts on one side of the piston 504 (e.g., in the first chamber 508) to move the piston 504 in one direction (e.g., downward), while relying on a spring 512 to push the piston 504 back in the other direction (upward). In this example, the spring 512 can apply a particular force on the piston 504 in one direction, while fluid pressure varies on the other side of the piston 504 to change the net force $F_{net}$ acting on the piston 504.

A spring is used herein as an example. Other ways (or a load, other cylinders, or the momentum of a flywheel) can be used to apply the upward force on the piston 504.

Similar to the control system 200, the controller 248 receives sensor information from the force sensor 246 and the magnetic sensor 252, and responsively determines the magnitude of the command signal to the solenoid actuator 244 to achieve a particular force on, and/or position of, the piston 504. For example, the actuator control system 400 can be used to control the cylinder actuator 502, without having the pressure control valve 208. Other valves and components can be added to the controls system 200 or the control system 500 to add other functionalities.

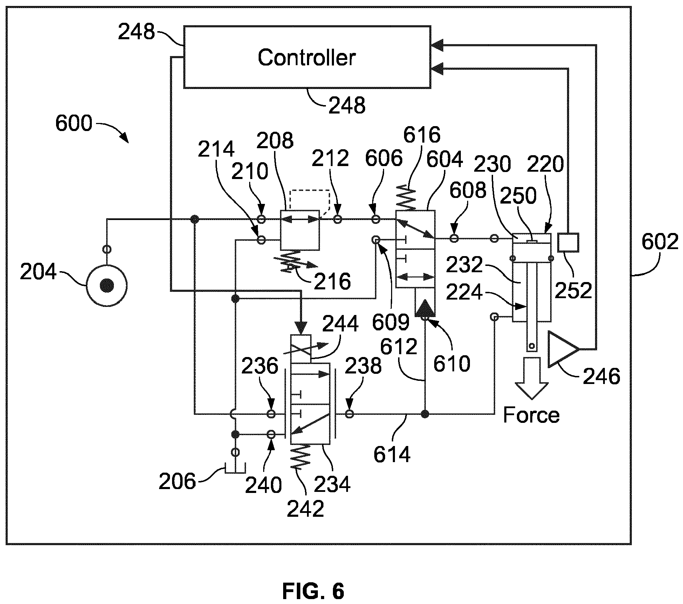

Figure 6 illustrates a control system 600 of a surface engaging unit 602, in accordance with an example implementation. The surface engaging unit 602 can represent any of the row units 102-110 of the surface engaging machine 100, for example.

The control system 600 has the same components of the control system 200 and such components are labeled with the same reference numbers. In the control system 200, the pressure control valve 208 is fluidly-coupled to the first chamber 230 in all operating conditions. In some applications, it may be desirable to relieve the first chamber 230 (i.e., fluidly coupling the first chamber 230 to the fluid reservoir 206) when pressure level in the second chamber 232 reaches a threshold pressure level or value. This may facilitate retracting the piston 224 fully at a lower pressure level in the second chamber 232, for example.

To achieve such functionality, the control system 600 has a pilot-operated valve 604 disposed between the pressure control valve 208 and the first chamber 230 of the cylinder actuator 220. The pilot-operated valve 604 has (i) a first port 606 that is fluidly-coupled to the outlet port 212 of the pressure control valve 208, (ii) a second port 608 that is fluidly-coupled to the first chamber 230 of the cylinder actuator 220, (iii) a third port 609 that is fluidly-coupled to the fluid reservoir 206, and (iv) a pilot port 610 that is fluidly-coupled via pilot line 612 to a fluid line 614 that fluidly-couples the outlet port 238 of the proportional control valve 234 to the second chamber 232. As such, the pilot port 610 is fluidly-coupled to the second chamber 232.

The pilot-operated valve 604 has a spring 616 that biases a movable element (e.g., a spool, poppet, or piston) within the pilot-operated valve 604 to a position at which fluid flows from the first port 606 to the second port 608, thus allowing fluid flow from the pressure control valve 208 to the first chamber 230, while the third port 609 is blocked. As pressure level of fluid at the pilot port 610 reaches a threshold pressure value that overcomes the spring 616, the movable element shifts. As a result, the first port 606 becomes blocked, while fluid is drained from the second port 608 to the third port 609, thereby relieving the first chamber 230 to the fluid reservoir 206.

In another example implementation, rather than using a pilot-operated valve, an electrically-actuated valve can be used to selectively allow fluid flow from the pressure control valve 208 to the first chamber 230.

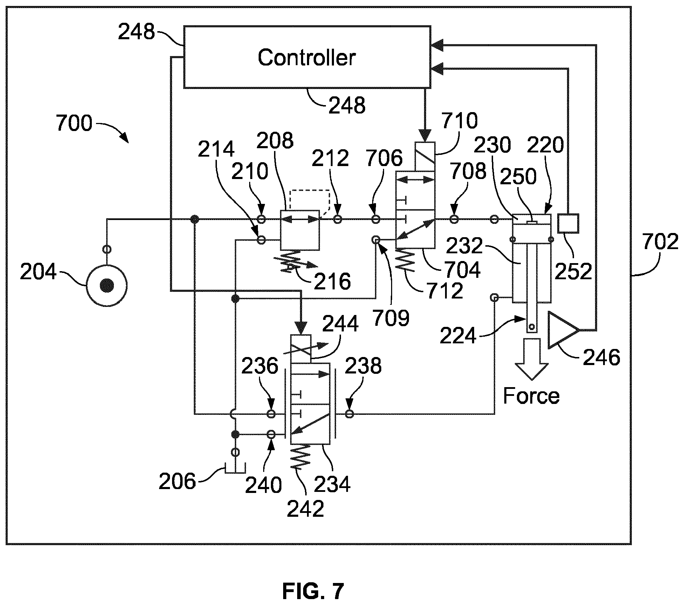

Figure 7 illustrates a control system 700 of a surface engaging unit 702, in accordance with an example implementation. The surface engaging unit 702 can represent any of the row units 102-110 of the surface engaging machine 100, for example.

The control system 700 has the same components of the control system 200 and such components are labeled with the same reference numbers. Rather than using the pilot-operated valve 604 to selectively fluidly couple the pressure control valve 208 to the first chamber 230, in the control system 700, a solenoid-operated or electrically-actuated valve 704 is used.

The electrically-actuated valve 704 is disposed between the pressure control valve 208 and the first chamber 230 of the cylinder actuator 220. The electrically-actuated valve 704 has (i) a first port 706 that is fluidly-coupled to the outlet port 212 of the pressure control valve 208, (ii) a second port 708 that is fluidly-coupled to the first chamber 230 of the cylinder actuator 220, (iii) a third port 709 that is fluidly-coupled to the fluid reservoir 206, and (iv) a solenoid actuator 710 configured to receive command signals from the controller 248.

The electrically-actuated valve 704 has a spring 712 that biases a movable element (e.g., a spool, poppet, or piston) within the electrically-actuated valve 704 to a position at which the first port 706 is blocked to preclude fluid flow from the pressure control valve 208 to the first chamber 230, while allowing fluid to be drained from the second port 708 to the third port 709, thereby relieving the first chamber 230 to the fluid reservoir 206. If the controller 248 provides a command signal the solenoid actuator 710, the movable element shifts. As a result, fluid flows from the first port 706 to the second port 708, thus allowing fluid flow from the pressure control valve 208 to the first chamber 230, while the third port 709 is blocked.

The controller 248 may provide the command signal to the solenoid actuator 710 in response to occurrence of a particular event. For example, the controller 248 may send the command signal based on the force sensor 246 indicating that a force threshold has been exceeded. In another example, a pressure sensor may be disposed in the first chamber 230 or the second chamber 232, and such sensor provides information indicative of pressure level in the first chamber 230 and/or the second chamber 232 to the controller 248. Based on the pressure level in the first chamber 230 or the second chamber 232 reaching a particular threshold value, the controller 248 activates or deactivates the solenoid actuator 710 as desired.

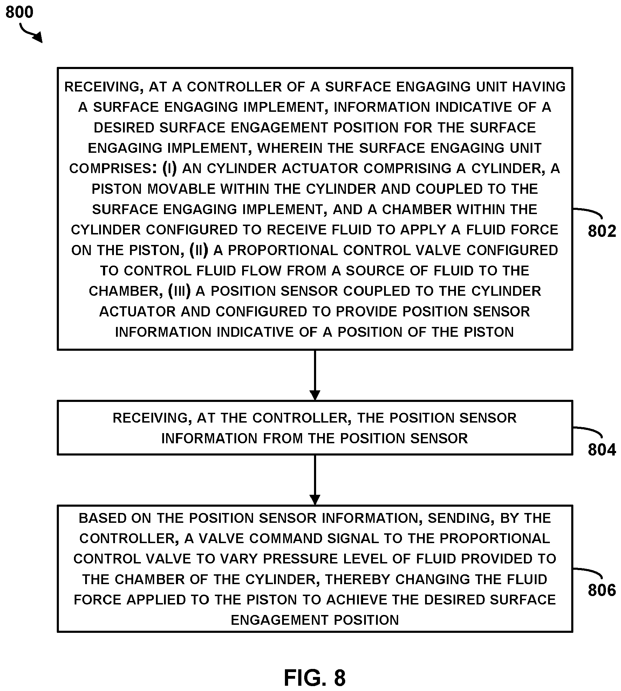

Figure 8 is a flowchart of a method 800 of controlling a surface engaging unit of a surface engaging machine, in accordance with an example implementation. For example, the method 800 can be implemented by the controller 248 to control the surface engaging unit (e.g., the row unit 102) of the surface engaging machine 100.

The method 800 may include one or more operations, or actions as illustrated by one or more of blocks 802-806. Although the blocks are illustrated in a sequential order, these blocks may in some instances be performed in parallel, and/or in a different order than those described herein. Also, the various blocks may be combined into fewer blocks, divided into additional blocks, and/or removed based upon the desired implementation.

In addition, for the method 800 and other processes and operations disclosed herein, the flowchart shows operation of one possible implementation of present examples. In this regard, each block may represent a module, a segment, or a portion of program code, which includes one or more instructions executable by a processor (e.g., a processor of the controller 248) or the controller 248 for implementing specific logical operations or steps in the process. The program code may be stored on any type of computer readable medium or memory, for example, such as a storage device including a disk or hard drive. The computer readable medium may include a non-transitory computer readable medium or memory, for example, such as computer-readable media that stores data for short periods of time like register memory, processor cache and Random Access Memory (RAM). The computer readable medium may also include non-transitory media or memory, such as secondary or persistent long term storage, like read only memory (ROM), optical or magnetic disks, compact-disc read only memory (CD-ROM), for example. The computer readable media may also be any other volatile or non-volatile storage systems. The computer readable medium may be considered a computer readable storage medium, a tangible storage device, or other article of manufacture, for example. In addition, for the method 800 and other processes and operations disclosed herein, one or more blocks in Figure 8 may represent circuitry or digital logic that is arranged to perform the specific logical operations in the process.

At block 802, the method 800 includes receiving, at the controller 248 of the surface engaging unit having the surface engaging implement 111, information indicative of a desired surface engagement position for the surface engaging implement 111, wherein the surface engaging unit comprises: (i) the cylinder actuator 220 comprising the cylinder 222, the piston 224 movable within the cylinder 222 and coupled to the surface engaging implement 111, and a chamber (e.g., the second chamber 232) within the cylinder 222 configured to receive fluid to apply a fluid force on the piston 224, (ii) the proportional control valve 234 configured to control fluid flow from the source 204 of fluid to the chamber, (iii) the position sensor coupled to the cylinder actuator 220 and configured to provide position sensor information indicative of a position of the piston 224.

At block 804, the method 800 includes receiving, at the controller 248, the position sensor information from the position sensor.

At block 806, the method 800 includes, based on the position sensor information, sending, by the controller 248, the valve command signal 410 to the proportional control valve 234 to vary pressure level of fluid provided to the chamber of the cylinder 222, thereby changing the fluid force applied to the piston 224 to achieve the desired surface engagement position.

The method 800 can include further steps described herein. For example, the surface engaging unit can include the force sensor 246 coupled to the piston 224 and configured to provide force sensor information indicative of an actual force applied by the piston 224 on the surface engaging implement 111. In this example, sending, by the controller 248, the valve command signal 410 to the proportional control valve 234 to vary pressure level of fluid provided to the chamber of the cylinder 222 is based on both the position sensor information and the force sensor information.

Further, as described above with respect to Figure 4, the controller 248 (e.g., the position control module 402) can determine a first difference between the desired surface engagement position and the position (the piston position sensor information signal 409) of the piston 224 indicated by the position sensor information. The controller 248 generates, based on the first difference, the reference force command 408. The controller 248 (e.g., the force control module 404) then determines a second difference between the reference force command 408 and the actual force (the force sensor information signal 412) indicated by the force sensor information, wherein the sending the valve command signal 410 to the proportional control valve 234 is based on the second difference.

The detailed description above describes various features and operations of the disclosed systems with reference to the accompanying figures. The illustrative implementations described herein are not meant to be limiting. Certain aspects of the disclosed systems can be arranged and combined in a wide variety of different configurations, all of which are contemplated herein.

Further, unless context suggests otherwise, the features illustrated in each of the figures may be used in combination with one another. Thus, the figures should be generally viewed as component aspects of one or more overall implementations, with the understanding that not all illustrated features are necessary for each implementation.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order.

Further, devices or systems may be used or configured to perform functions presented in the figures.

In some instances, components of the devices and/or systems may be configured to perform the functions such that the components are actually configured and structured (with hardware and/or software) to enable such performance. In other examples, components of the devices and/or systems may be arranged to be adapted to, capable of, or suited for performing the functions, such as when operated in a specific manner.

By the term "substantially" or "about" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

The arrangements described herein are for purposes of example only. As such, those skilled in the art will appreciate that other arrangements and other elements (e.g., machines, interfaces, operations, orders, and groupings of operations, etc.) can be used instead, and some elements may be omitted altogether according to the desired results. Further, many of the elements that are described are functional entities that may be implemented as discrete or distributed components or in conjunction with other components, in any suitable combination and location.

While various aspects and implementations have been disclosed herein, other aspects and implementations will be apparent to those skilled in the art. The various aspects and implementations disclosed herein are for purposes of illustration and are not intended to be limiting, with the true scope being indicated by the following claims, along with the full scope of equivalents to which such claims are entitled. Also, the terminology used herein is for the purpose of describing particular implementations only, and is not intended to be limiting.

Embodiments of the present disclosure can thus relate to one of the enumerated example embodiments (EEEs) listed below.

EEE 1 a control system for a surface engaging unit, comprising: a source of fluid; a cylinder actuator comprising (i) a cylinder, (ii) a piston movable within the cylinder and configured to be coupled to a surface engaging implement of the surface engaging unit, and (iii) a chamber within the cylinder configured to receive fluid to apply a fluid force on the piston; a proportional control valve configured to control fluid flow from the source of fluid to the chamber; a position sensor coupled to the cylinder actuator and configured to provide position sensor information indicative of a position of the piston; and a controller having access to a desired surface engagement position for the surface engaging implement, wherein the controller is configured to perform operations comprising: receiving the position sensor information from the position sensor, and based on the position sensor information, sending a valve command signal to the proportional control valve to vary pressure level of fluid provided to the chamber of the cylinder, thereby changing the fluid force applied to the piston to achieve the desired surface engagement position.

EEE 2 the control system of EEE 1, wherein the cylinder actuator is a double-acting cylinder actuator, wherein the piston divides an inner space of the cylinder to a first chamber and a second chamber, wherein the proportional control valve controls fluid flow to the second chamber, wherein the control system further comprises: a pressure control valve disposed between the source of fluid and the first chamber, wherein the pressure control valve is configured to receive fluid from the source of fluid and provide fluid to the first chamber at a substantially constant pressure level such that fluid in the first chamber applies a constant fluid force in a first direction on the piston, wherein fluid in the second chamber applies the fluid force on the piston in a second direction, opposite the first direction, wherein the controller sends the valve command signal to the proportional control valve to vary pressure level of fluid in the second chamber to change the fluid force acting on the piston in the second direction, thereby changing a net force applied to the piston.

EEE 3 is the control system of EEE 2, further comprising: a fluid reservoir, wherein the pressure control valve is a pressure reducing-relieving valve comprising: (i) an inlet port that is fluidly-coupled to the source of fluid, (ii) an outlet port that is fluidly coupled to the first chamber, and (iii) a drain port that is fluidly-coupled to the fluid reservoir, wherein the pressure control valve is configured to reduce pressure level of fluid received at the inlet port and provide fluid having a reduced pressure level via the outlet port to the first chamber, and wherein the pressure control valve is configured to relieve fluid at the outlet port to the drain port when pressure level at the outlet port exceeds the reduced pressure level.

EEE 4 is the control system of any of EEEs 2-3, further comprising: a pilot-operated valve disposed between the pressure control valve and the first chamber, wherein the pilot-operated valve has a pilot port that is fluidly-coupled to second chamber of the cylinder actuator, wherein the pilot-operated valve is configured to operate in (i) a first state, wherein fluid is allowed to flow from the pressure control valve through the pilot-operated valve to the first chamber, and (ii) a second state when pressure level of fluid in the second chamber and at the pilot port reaches a threshold pressure level at which the pilot-operated valve blocks fluid flow to the first chamber.

EEE 5 is the control system of any of EEEs 2-4, further comprising: an electrically-actuated valve disposed between the pressure control valve and the first chamber, wherein the electrically-actuated valve is configured to operate in a first state, wherein the electrically-actuated valve blocks fluid flow to the first chamber, wherein the controller is configured to perform further operations comprising: sending a signal to the electrically-actuated valve to operate the electrically-actuated valve in a second state, wherein the electrically-actuated valve allows fluid flow to the first chamber.

EEE 6 is the control system of EEE 1, wherein the cylinder actuator is a single-acting cylinder actuator having a spring that applies a biasing force on the piston in a first direction, wherein fluid in the chamber applies the fluid force on the piston in a second direction, opposite the first direction, wherein the controller sends the valve command signal to the proportional control valve to vary pressure level of fluid in the chamber to change the fluid force acting on the piston in the second direction, thereby changing a net force applied to the piston.

EEE 7 is the control system of any of EEEs 1-6, further comprising: a force sensor coupled to the piston and configured to provide force sensor information indicative of an actual force applied by the piston on the surface engaging implement, wherein sending, by the controller, the valve command signal to the proportional control valve to vary pressure level of fluid provided to the chamber of the cylinder is based on both the position sensor information and the force sensor information.

EEE 8 is the control system of EEE 7, wherein the controller is configured to perform further operations comprising: determining a first difference between the desired surface engagement position and the position of the piston indicated by the position sensor information, generating, based on the first difference, a reference force command, and determining a second difference between the reference force command and the actual force indicated by the force sensor information, wherein the sending the valve command signal to the proportional control valve is based on the second difference.

EEE 9 is the control system of any of EEEs 1-8, wherein the position sensor comprises (i) a magnet coupled to the piston and movable therewith, and (ii) a magnetic sensor mounted to the cylinder and configured to measure magnetic field intensity as the piston and the magnet move, and provide a signal to the controller indicative of the magnetic field intensity, and wherein the controller determines the position of the piston based on the signal from the magnetic sensor.

EEE 10 is a surface engaging machine comprising: a plurality of row units, wherein at least one row unit of the plurality of row units comprises a surface engaging implement; and a control system comprising a source of fluid, a cylinder actuator comprising (i) a cylinder, (ii) a piston movable within the cylinder and coupled to the surface engaging implement, and (iii) a chamber within the cylinder configured to receive fluid to apply a fluid force on the piston, a proportional control valve configured to control fluid flow from the source of fluid to the chamber, a position sensor coupled to the cylinder actuator and configured to provide position sensor information indicative of a position of the piston, and a controller having access to a desired surface engagement position for the surface engaging implement, wherein the controller is configured to perform operations comprising: receiving the position sensor information from the position sensor, and, based on the position sensor information, sending a valve command signal to the proportional control valve to vary pressure level of fluid provided to the chamber of the cylinder, thereby changing the fluid force applied to the piston to achieve the desired surface engagement position.

EEE 11 is the surface engaging machine of EEE 10, wherein the cylinder actuator is a double-acting cylinder actuator, wherein the piston divides an inner space of the cylinder to a first chamber and a second chamber, wherein the proportional control valve controls fluid flow to the second chamber, wherein the control system further comprises: a pressure control valve disposed between the source of fluid and the first chamber, wherein the pressure control valve is configured to receive fluid from the source of fluid and provide fluid to the first chamber at a substantially constant pressure level such that fluid in the first chamber applies a constant fluid force in a first direction on the piston, wherein fluid in the second chamber applies the fluid force on the piston in a second direction, opposite the first direction, wherein the controller sends the valve command signal to the proportional control valve to vary pressure level of fluid in the second chamber to change the fluid force acting on the piston in the second direction, thereby changing a net force applied to the piston.

EEE 12 is the surface engaging machine of EEE 11, further comprising: a fluid reservoir, wherein the pressure control valve is a pressure reducing-relieving valve comprising: (i) an inlet port that is fluidly-coupled to the source of fluid, (ii) an outlet port that is fluidly coupled to the first chamber, and (iii) a drain port that is fluidly-coupled to the fluid reservoir, wherein the pressure control valve is configured to reduce pressure level of fluid received at the inlet port and provide fluid having a reduced pressure level via the outlet port to the first chamber, and wherein the pressure control valve is configured to relieve fluid at the outlet port to the drain port when pressure level at the outlet port exceeds the reduced pressure level.

EEE 13 is the surface engaging machine of any of EEEs 11-12, wherein the control system further comprises: a pilot-operated valve disposed between the pressure control valve and the first chamber, wherein the pilot-operated valve has a pilot port that is fluidly-coupled to second chamber of the cylinder actuator, wherein the pilot-operated valve is configured to operate in (i) a first state, wherein fluid is allowed to flow from the pressure control valve through the pilot-operated valve to the first chamber, and (ii) a second state when pressure level of fluid in the second chamber and at the pilot port reaches a threshold pressure level at which the pilot-operated valve blocks fluid flow to the first chamber.

EEE 14 is the surface engaging machine of any of EEEs 11-13, wherein the control system further comprises: an electrically-actuated valve disposed between the pressure control valve and the first chamber, wherein the electrically-actuated valve is configured to operate in a first state, wherein the electrically-actuated valve blocks fluid flow to the first chamber, wherein the controller is configured to perform further operations comprising: sending a signal to the electrically-actuated valve to operate the electrically-actuated valve in a second state, wherein the electrically-actuated valve allows fluid flow to the first chamber.

EEE 15 is the surface engaging machine of EEE 10, wherein the cylinder actuator is a single-acting cylinder actuator having a spring that applies a biasing force on the piston in a first direction, wherein fluid in the chamber applies the fluid force on the piston in a second direction, opposite the first direction, wherein the controller sends the valve command signal to the proportional control valve to vary pressure level of fluid in the chamber to change the fluid force acting on the piston in the second direction, thereby changing a net force applied to the piston.

EEE 16 is the surface engaging machine of any of EEEs 10-15, wherein the control system further comprises: a force sensor coupled to the piston and configured to provide force sensor information indicative of an actual force applied by the piston on the surface engaging implement, wherein sending, by the controller, the valve command signal to the proportional control valve to vary pressure level of fluid provided to the chamber of the cylinder is based on both the position sensor information and the force sensor information.

EEE 17 is the surface engaging machine of any of EEEs 10-16, wherein the position sensor comprises (i) a magnet coupled to the piston and movable therewith, and (ii) a magnetic sensor mounted to the cylinder and configured to measure magnetic field intensity as the piston and the magnet move, and provide a signal to the controller indicative of the magnetic field intensity, and wherein the controller determines the position of the piston based on the signal from the magnetic sensor.

EEE 18 is a method comprising: receiving, at a controller of a surface engaging unit having a surface engaging implement, information indicative of a desired surface engagement position for the surface engaging implement, wherein the surface engaging unit comprises: (i) a cylinder actuator comprising a cylinder, a piston movable within the cylinder and coupled to the surface engaging implement, and a chamber within the cylinder configured to receive fluid to apply a fluid force on the piston, (ii) a proportional control valve configured to control fluid flow from a source of fluid to the chamber, (iii) a position sensor coupled to the cylinder actuator and configured to provide position sensor information indicative of a position of the piston; receiving, at the controller, the position sensor information from the position sensor; and based on the position sensor information, sending, by the controller, a valve command signal to the proportional control valve to vary pressure level of fluid provided to the chamber of the cylinder, thereby changing the fluid force applied to the piston to achieve the desired surface engagement position.

EEE 19 is the method of EEE 18, wherein the surface engaging unit comprises: a force sensor coupled to the piston and configured to provide force sensor information indicative of an actual force applied by the piston on the surface engaging implement, wherein sending, by the controller, the valve command signal to the proportional control valve to vary pressure level of fluid provided to the chamber of the cylinder is based on both the position sensor information and the force sensor information.

EEE 20 is the method of EEE 19, further comprising: determining a first difference between the desired surface engagement position and the position of the piston indicated by the position sensor information; generating, based on the first difference, a reference force command; and determining a second difference between the reference force command and the actual force indicated by the force sensor information, wherein the sending the valve command signal to the proportional control valve is based on the second difference.

**Claims**

1. A control system for a surface engaging unit, comprising:

   a source of fluid;
   a cylinder actuator comprising (i) a cylinder, (ii) a piston movable within the cylinder and configured to be coupled to a surface engaging implement of the surface engaging unit, and (iii) a chamber within the cylinder configured to receive fluid to apply a fluid force on the piston;
   a proportional control valve configured to control fluid flow from the source of fluid to the chamber;
   a position sensor coupled to the cylinder actuator and configured to provide position sensor information indicative of a position of the piston; and
   a controller having access to a desired surface engagement position for the surface engaging implement, wherein the controller is configured to perform operations comprising:

   receiving the position sensor information from the position sensor, and
   based on the position sensor information, sending a valve command signal to the proportional control valve to vary pressure level of fluid provided to the chamber of the cylinder, thereby changing the fluid force applied to the piston to achieve the desired surface engagement position.

2. The control system of claim 1, wherein the cylinder actuator is a double-acting cylinder actuator, wherein the piston divides an inner space of the cylinder to a first chamber and a second chamber, wherein the proportional control valve controls fluid flow to the second chamber, wherein the control system further comprises:

   a pressure control valve disposed between the source of fluid and the first chamber, wherein the pressure control valve is configured to receive fluid from the source of fluid and provide fluid to the first chamber at a substantially constant pressure level such that fluid in the first chamber applies a constant fluid force in a first direction on the piston, wherein fluid in the second chamber applies the fluid force on the piston in a second direction, opposite the first direction, wherein the controller sends the valve command signal to the proportional control valve to vary pressure level of fluid in the second chamber to change the fluid force acting on the piston in the second direction, thereby changing a net force applied to the piston.

3. The control system of claim 2, further comprising:
   a fluid reservoir, wherein the pressure control valve is a pressure reducing-relieving valve comprising: (i) an inlet port that is fluidly-coupled to the source of fluid, (ii) an outlet port that is fluidly coupled to the first chamber, and (iii) a drain port that is fluidly-coupled to the fluid reservoir, wherein the pressure control valve is configured to reduce pressure level of fluid received at the inlet port and provide fluid having a reduced pressure level via the outlet port to the first chamber, and wherein the pressure control valve is configured to relieve fluid at the outlet port to the drain port when pressure level at the outlet port exceeds the reduced pressure level.

4. The control system of claim 2 or claim 3, further comprising:
   a pilot-operated valve disposed between the pressure control valve and the first chamber, wherein the pilot-operated valve has a pilot port that is fluidly-coupled to second chamber of the cylinder actuator, wherein the pilot-operated valve is configured to operate in (i) a first state, wherein fluid is allowed to flow from the pressure control valve through the pilot-operated valve to the first chamber, and (ii) a second state when pressure level of fluid in the second chamber and at the pilot port reaches a threshold pressure level at which the pilot-operated valve blocks fluid flow to the first chamber.

5. The control system of any of claims 2 to 4, further comprising:
   an electrically-actuated valve disposed between the pressure control valve and the first chamber, wherein the electrically-actuated valve is configured to operate in a first state, wherein the electrically-actuated valve blocks fluid flow to the first chamber, wherein the controller is configured to perform further operations comprising:

sending a signal to the electrically-actuated valve to operate the electrically-actuated valve in a second state, wherein the electrically-actuated valve allows fluid flow to the first chamber.

6.  The control system of claim 1, wherein the cylinder actuator is a single-acting cylinder actuator having a spring that applies a biasing force on the piston in a first direction, wherein fluid in the chamber applies the fluid force on the piston in a second direction, opposite the first direction, wherein the controller sends the valve command signal to the proportional control valve to vary pressure level of fluid in the chamber to change the fluid force acting on the piston in the second direction, thereby changing a net force applied to the piston.

7.  The control system of any preceding claim, further comprising:
    a force sensor coupled to the piston and configured to provide force sensor information indicative of an actual force applied by the piston on the surface engaging implement, wherein sending, by the controller, the valve command signal to the proportional control valve to vary pressure level of fluid provided to the chamber of the cylinder is based on both the position sensor information and the force sensor information.

8.  The control system of claim 7, wherein the controller is configured to perform further operations comprising:

    determining a first difference between the desired surface engagement position and the position of the piston indicated by the position sensor information,
    generating, based on the first difference, a reference force command, and
    determining a second difference between the reference force command and the actual force indicated by the force sensor information, wherein the sending the valve command signal to the proportional control valve is based on the second difference.

9.  The control system of any preceding claim, wherein the position sensor comprises (i) a magnet coupled to the piston and movable therewith, and (ii) a magnetic sensor mounted to the cylinder and configured to measure magnetic field intensity as the piston and the magnet move, and provide a signal to the controller indicative of the magnetic field intensity, and wherein the controller determines the position of the piston based on the signal from the magnetic sensor.

10. A surface engaging machine comprising:

a plurality of row units, wherein at least one row unit of the plurality of row units comprises a surface engaging implement; and
the control system of any preceding claim, wherein the piston is coupled to the surface engaging implement.

11. A method comprising:

    receiving, at a controller of a surface engaging unit having a surface engaging implement, information indicative of a desired surface engagement position for the surface engaging implement, wherein the surface engaging unit comprises: (i) a cylinder actuator comprising a cylinder, a piston movable within the cylinder and coupled to the surface engaging implement, and a chamber within the cylinder configured to receive fluid to apply a fluid force on the piston, (ii) a proportional control valve configured to control fluid flow from a source of fluid to the chamber, (iii) a position sensor coupled to the cylinder actuator and configured to provide position sensor information indicative of a position of the piston;
    receiving, at the controller, the position sensor information from the position sensor; and
    based on the position sensor information, sending, by the controller, a valve command signal to the proportional control valve to vary pressure level of fluid provided to the chamber of the cylinder, thereby changing the fluid force applied to the piston to achieve the desired surface engagement position.

12. The method of claim 11, wherein the surface engaging unit comprises:
    a force sensor coupled to the piston and configured to provide force sensor information indicative of an actual force applied by the piston on the surface engaging implement, wherein sending, by the controller, the valve command signal to the proportional control valve to vary pressure level of fluid provided to the chamber of the cylinder is based on both the position sensor information and the force sensor information.

13. The method of claim 12, further comprising:

    determining a first difference between the desired surface engagement position and the position of the piston indicated by the position sensor information;
    generating, based on the first difference, a reference force command; and
    determining a second difference between the reference force command and the actual force indicated by the force sensor information, wherein the sending the valve command signal to the proportional control valve is based on the second difference.

**14.** The method of claim 11, wherein the cylinder actuator is a double-acting cylinder actuator, wherein the piston divides an inner space of the cylinder to a first chamber and a second chamber, wherein the proportional control valve controls fluid flow to the second chamber, wherein the surface engaging unit further comprises a pressure control valve disposed between the source of fluid and the first chamber, wherein the pressure control valve is configured to receive fluid from the source of fluid and provide fluid to the first chamber at a substantially constant pressure level such that fluid in the first chamber applies a constant fluid force in a first direction on the piston, wherein fluid in the second chamber applies the fluid force on the piston in a second direction, opposite the first direction, wherein sending, by the controller, the valve command signal to the proportional control valve comprises:
sending the valve command to the proportional control valve to vary pressure level of fluid in the second chamber to change the fluid force acting on the piston in the second direction, thereby changing a net force applied to the piston.

**15.** The method of claim 14, wherein the surface engaging unit further comprises an electrically-actuated valve disposed between the pressure control valve and the first chamber, wherein the electrically-actuated valve is configured to operate in a first state, wherein the electrically-actuated valve blocks fluid flow to the first chamber, and wherein the method further comprises:
sending, by the controller, a signal to the electrically-actuated valve to operate the electrically-actuated valve in a second state, wherein the electrically-actuated valve allows fluid flow to the first chamber.

**FIG. 1A**

**FIG. 1B**

**FIG. 2**

248 Controller

220

250

222

224

P0

**FIG. 3A**

252

248 Controller

Voltage Signal

220

222

250

P0 = V0
P1 = V1

224

P1

224

252

**FIG. 3B**

400

204

208 Pressure
Control Valve

206

409

412

Cylinder
Actuator

220

406 Commanded
Piston Position

408

410

402

Position
Control

Force
Control

404

Proportional
Control Valve

234

204

206

**FIG. 4**

FIG. 5

**FIG. 6**

**FIG. 7**

800

RECEIVING, AT A CONTROLLER OF A SURFACE ENGAGING UNIT HAVING A SURFACE ENGAGING IMPLEMENT, INFORMATION INDICATIVE OF A DESIRED SURFACE ENGAGEMENT POSITION FOR THE SURFACE ENGAGING IMPLEMENT, WHEREIN THE SURFACE ENGAGING UNIT COMPRISES: (I) AN CYLINDER ACTUATOR COMPRISING A CYLINDER, A PISTON MOVABLE WITHIN THE CYLINDER AND COUPLED TO THE SURFACE ENGAGING IMPLEMENT, AND A CHAMBER WITHIN THE CYLINDER CONFIGURED TO RECEIVE FLUID TO APPLY A FLUID FORCE ON THE PISTON, (II) A PROPORTIONAL CONTROL VALVE CONFIGURED TO CONTROL FLUID FLOW FROM A SOURCE OF FLUID TO THE CHAMBER, (III) A POSITION SENSOR COUPLED TO THE CYLINDER ACTUATOR AND CONFIGURED TO PROVIDE POSITION SENSOR INFORMATION INDICATIVE OF A POSITION OF THE PISTON

802

RECEIVING, AT THE CONTROLLER, THE POSITION SENSOR INFORMATION FROM THE POSITION SENSOR

804

BASED ON THE POSITION SENSOR INFORMATION, SENDING, BY THE CONTROLLER, A VALVE COMMAND SIGNAL TO THE PROPORTIONAL CONTROL VALVE TO VARY PRESSURE LEVEL OF FLUID PROVIDED TO THE CHAMBER OF THE CYLINDER, THEREBY CHANGING THE FLUID FORCE APPLIED TO THE PISTON TO ACHIEVE THE DESIRED SURFACE ENGAGEMENT POSITION

806

FIG. 8

Europäisches
Patentamt

European
Patent Office

Office européen
des brevets

# EUROPEAN SEARCH REPORT

**Application Number**

EP 23 15 7820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/029485 A1 (GLENNON MICHAEL W [US] ET AL) 30 January 2020 (2020-01-30) | 1,9-11 | INV. A01B63/00 |
| Y | * figures 1, 2 * | 2,3,6,7, 12,14 | A01B63/111 |
| A | * paragraphs [0018], [0027], [0032] – [0038] * | 4,5,8, 13,15 | |
| | ----- | | |
| Y | US 11 246 254 B1 (SCHULTE DAVID C [US]) 15 February 2022 (2022-02-15) * figures 1-3 * * claim 1 * | 2,3,7, 12,14 | |
| | ----- | | |
| Y | US 2014/116735 A1 (BASSETT JOSEPH D [US]) 1 May 2014 (2014-05-01) * figure 46A * * paragraphs [0244], [0245] * | 6 | |
| | ----- | | |

**TECHNICAL FIELDS SEARCHED (IPC)**

A01B

The present search report has been drawn up for all claims

| Place of search | Date of completion of the search | Examiner |
|---|---|---|
| Munich | 19 September 2023 | Holtermann, Timm |

EPO FORM 1503 03.82 (P04C01)

## ANNEX TO THE EUROPEAN SEARCH REPORT
## ON EUROPEAN PATENT APPLICATION NO.

EP 23 15 7820

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2023

| Patent document cited in search report | | Publication date | Patent family member(s) | | Publication date |
|---|---|---|---|---|---|
| US 2020029485 | A1 | 30-01-2020 | NONE | | |
| US 11246254 | B1 | 15-02-2022 | US | 11246254 B1 | 15-02-2022 |
| | | | US | 2022159896 A1 | 26-05-2022 |
| US 2014116735 | A1 | 01-05-2014 | US | 2014116735 A1 | 01-05-2014 |
| | | | US | 2016100517 A1 | 14-04-2016 |
| | | | US | 2017359940 A1 | 21-12-2017 |
| | | | US | 2020060060 A1 | 27-02-2020 |
| | | | US | 2021315145 A1 | 14-10-2021 |

EPO FORM P0459

For more details about this annex : see Official Journal of the European Patent Office, No. 12/82